# EUROPÄISCHE PATENTSCHRIFT

(11) **EP 2 853 020 B1**
(45) Veröffentlichungstag und Bekanntmachung des Hinweises auf die Patenterteilung: **04.12.2019**
(21) Anmeldenummer: 13714913.4
(22) Anmeldetag: 05.04.2013
(51) Int. Cl.: H02K 15/02, H02K 1/22, H02K 7/18, H02K 15/00, H02K 19/26

(54) **SYNCHRONGENERATOR EINER GETRIEBELOSEN WINDENERGIEANLAGE**
SYNCHRONOUS GENERATOR OF A GEARLESS WIND ENERGY TURBINE
GÉNÉRATEUR SYNCHRONE D'UNE ÉOLIENNE À ENTRAÎNEMENT DIRECT

(30) Priorität: 22.05.2012 DE 102012208547
(43) Veröffentlichungstag der Anmeldung: 01.04.2015
(73) Patentinhaber: Wobben Properties GmbH, 26607 Aurich (DE)
(72) Erfinder: GUDEWER, Wilko, 26506 Norden (DE); GIENGIEL, Wojciech, 26607 Aurich (DE)
(74) Vertreter: Eisenführ Speiser
(86) Internationale Anmeldenummer: PCT/EP2013/057253
(87) Internationale Veröffentlichungsnummer: WO 2013/174566

(56) Entgegenhaltungen:
- EP-A2- 2 149 703
- WO-A2-2011/006810
- DE-A1-102010 039 590

## Beschreibung

Die vorliegende Erfindung betrifft einen Synchrongenerator einer getriebelosen Windenergieanlage. Außerdem betrifft die Anmeldung eine Windenergieanlage mit einem solchen Generator. Weiterhin betrifft die vorliegende Anmeldung eine Transportanordnung zum Transportieren eines Synchrongenerators einer getriebelosen Windenenergieanlage.

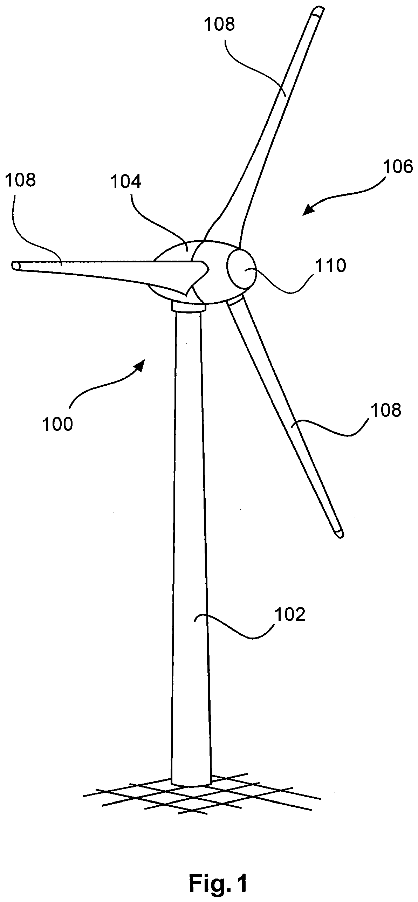

Windenergieanlagen, insbesondere Horizontalachsenwindenergieanlagen, von denen eine in Fig. 1 gezeigt ist, sind allgemein bekannt. Im Fall einer getriebelosen Windenergieanlage wie sie in Fig. 1 gezeigt ist, treibt ein aerodynamischer Rotor den Läufer eines Generators unmittelbar an, so dass dieser Generator die aus dem Wind gewonnene Bewegungsenergie in elektrische Energie umwandelt. Der Läufer des Generators dreht sich damit ebenso langsam wie der aerodynamische Rotor. Zur Berücksichtigung einer solchen langsamen Drehzahl weist der Generator einen bezogen auf die Nennleistung verhältnismäßig großen Generatordurchmesser, insbesondere großen Luftspaltdurchmesser, auf. Hierdurch kann trotz langsamer Drehzahl eine verhältnismäßig große Differenzgeschwindigkeit zwischen Läufer und Stator im Bereich des Luftspalts erreicht werden. Moderne Windenergieanlagen, wie bspw. eine E126 der ENERCON GmbH, weist eine Nennleistung von 7,5 MW auf. Auch diese E126 ist eine getriebelose Windenergieanlage und benötigt einen auch von der Baugröße her entsprechend großen Generator.

Problematisch ist hierbei insbesondere, einen solchen Generator zum Aufstellungsort der Windenergieanlage zu transportieren. In vielen Staaten beträgt die Maximalbreite, die auf der Straße transportiert werden kann, etwa 5 m. Das bedeutet, dass der maximale Durchmesser des Generators bei einem Transport 5 m betragen darf, wenn der Generator liegend, also mit einer Drehachse senkrecht zur Straße transportiert wird. Der Durchmesser eines Generators ist hierdurch defakto begrenzt. Selbst wenn ein solches Transportproblem für manche Aufstellungsorte, insbesondere welche in der Nähe einer Generatorfertigung oder in der Nähe eines Hafens gelöst werden könnte, so ist dennoch ein anzustrebender Standardgenerator, der häufig eingesetzt werden soll, durch diese Transportabmessung begrenzt.

Die genannte Windenergieanlage vom Typ E126 weist einen Generator mit einem Luftspaltdurchmesser von etwa 10 m auf. Bei diesem Generator wird das Transportproblem dadurch gelöst, dass der Generator in mehren Teilen transportiert wird, indem nämlich Läufer und Stator jeweils in vier Teile unterteilt werden. Der Rotor und Stator werden somit in Einzelteilen angeliefert und auf der Baustelle oder dort in der Nähe zusammengesetzt.

Problematisch hierbei ist, dass solche Trennstellen vor Ort und damit außerhalb der Generatorfertigungshallen, wieder zusammengesetzt werden müssen. Es ist aufwändig und fehleranfällig. Auch eine Überprüfung der Zusammensetzung bzw. eine Überprüfung des fertigen Generators ist vor Ort schwieriger und damit aufwändiger und ebenfalls fehleranfälliger, als am Ort der Generatorfertigung.

So ist bspw. von anderen Windenergieanlagen der ENERCON GmbH bekannt, dass eine durchgängige Wicklung jedenfalls des Stators vorteilhaft sein kann. Dies ist bspw. in dem europäischen Patent EP 1 419 315 B1 beschrieben. Die dort beschriebene Wicklung des Stators ist sehr aufwändig und kann im Grunde nur in der Werkshalle verlässlich durchgeführt werden. Das Ergebnis ist allerdings ein sehr zuverlässig arbeitender Generator. Eine in der Werkshalle vorgenommene durchgängige Wicklung schließt dabei ein Auftrennen in mehrere Teile zum Transport aus.

Das deutsche Patent- und Markenamt hat in der Prioritätsanmeldung folgenden Stand der Technik recherchiert: DE 199 23 925 A1, US 2010/0024311 A1, DE 10 2009 032 885 A1, DE 10 2010 039 590 A1.

Aufgabe der vorliegenden Erfindung war es somit, wenigstens eines der oben genannten Probleme zu adressieren. Insbesondere soll eine Lösung vorgeschlagen werden, die einen möglichst großen Generator einer Windenergieanlage ermöglicht, die genannte Transportproblematik berücksichtigt und gleichzeitig eine hohe Zuverlässigkeit hat. Zumindest soll eine alternative Lösung vorgeschlagen werden.

Erfindungsgemäß wird ein Synchrongenerator gemäß Anspruch 1 vorgeschlagen. Ein solcher Synchrongenerator einer getriebelosen Windenergieanlage umfasst somit einen Stator und einen Läufer. Zur sprachlichen Abgrenzung gegen den aerodynamischen Rotor, der im Wesentlichen aus einer Nabe und einem oder mehreren, insbesondere drei Rotorblättern besteht, wird nachfolgend der Begriff Läufer für den drehenden Teil des Generators verwendet. Hierbei wird erfindungsgemäß ein mehrteiliger Außenläufer verwendet. Der Generator ist somit ein Außenläufergenerator, mit innenliegendem Stator und außenliegendem Läufer. Weiterhin ist der Läufer geteilt, nämlich wenigstens in zwei Teile. Der Stator ist nicht geteilt.

Es wurde somit erkannt, dass eine Vergrößerung des Generators in seinem Durchmesser ohne Teilung des Stators möglich ist. Ein innenliegender Stator kann somit einteilig ausgebildet sein und eine Größe bis zur maximalen Transportbreite aufweisen. Der Außendurchmesser des Stators entspricht in diesem Fall etwa dem mittleren Durchmesser des Luftspalts bzw. präzise formuliert dem Innendurchmesser des Luftspalts.

Der Außenläufer weist jedoch einen größeren Außendurchmesser auf, nämlich größer als der Luftspaltdurchmesser und kann damit auch größer als die maximale Transportbreite ausfallen. Entsprechend wird vorgeschlagen, den Außenläufer zu teilen. Dabei liegt die Erkenntnis zugrunde, dass eine Teilung des Läufers, insbesondere wenn es ein Außenläufer ist, mit wenigen Problemen verbunden ist. Selbst wenn der Generator ein fremd erregter Synchrongenerator ist und somit der Läufer elektrisch mit einem Erregerstrom versorgt werden muss, bereitet die Trennung eines solchen Rotors wenig Probleme. Für eine Fremderregung braucht nämlich lediglich ein Gleichstrom bereitgestellt zu werden, so dass bei einer Trennung des Läufers und entsprechend bei einem Wiederzusammensetzen des Läufers lediglich entsprechende Gleichstromleitungen, im einfachsten Fall zwei Gleichstromleitungen, wieder verbunden werden müssten. Die Fehleranfälligkeit ist hierbei gering, insbesondere im Vergleich zu einem Aufwand der für einen 3-phasigen oder sogar 6-phasigen Stator nötig wäre.

Systembedingt wird ein fremd erregter Läufer zudem, jedenfalls bei üblichen getriebelosen Windenergieanlagen, aus vielen einzelnen Läuferpolen, nämlich Kernen mit entsprechenden Spulen, zusammengesetzt. Da jeder Läuferpol eine Gleichstromwicklung trägt, bietet sich für den Läufer eine durchgängige Wicklung, wie sie bspw. für den Stator bekannt ist, nicht an. Das erleichtert die Teilbarkeit.

Gemäß einer Ausführung wird vorgeschlagen, dass der Synchrongenerator als Ringgenerator ausgebildet ist. Ein Ringgenerator beschreibt eine Bauform eines Generators, bei der der magnetisch wirksame Bereich im Wesentlichen auf einem Ringbereich konzentrisch um die Drehachse des Generators angeordnet ist. Insbesondere ist der magnetisch wirksame Bereich, nämlich vom Läufer und vom Stator nur im radial äußeren Viertel des Generators angeordnet. Gleichwohl kann in der Mitte des Generators eine Tragkonstruktion für den Stator vorgesehen sein.

Vorzugsweise sind wenigstens 48, weiter vorzugsweise wenigstens 72 und insbesondere wenigstens 192, Statorpole vorgesehen. Es wird somit ein vielpoliger Generator vorgeschlagen. Dieser eignet sich als langsam laufender Generator und ist somit vorzüglich an den Einsatz in der getriebelosen Windenergieanlage angepasst.

In vorteilhafter Weise wird zudem vorgeschlagen, den Generator als 6-phasigen Generator auszubilden, nämlich als Generator, der zwei 3-phasige Systeme aufweist, die insbesondere um etwa 30 Grad zueinander verschoben sind. Hierdurch ergibt sich ein sehr gleichmäßig generierter, nämlich im Wesentlichen 6-phasiger Strom, der vorteilhaft für die Weiterverarbeitung ist. Insbesondere eignet sich ein solcher 6-phasiger Strom gut für eine anschließende Gleichrichtung und dann Weiterverarbeitung mit einem Frequenzwechselrichter. Insbesondere ist er vorteilhaft für ein sog. Vollumrichterkonzept, bei dem der generierte Strom vollständig - unter Vernachlässigung etwaiger Verluste - gleichgerichtet und durch den Wechselrichter zur Einspeisung in ein Stromnetz vorbereitet wird.

Als vorteilhaft wird zudem eine Ausführungsform vorgeschlagen, bei der der Stator des Synchrongenerators eine durchgängige Wicklung aufweist. Der Stator kann somit auf sehr verlässliche Art und Weise hergestellt werden, insbesondere ohne unnötige elektrische Verbindungspunkte, wodurch insoweit eine Minimierung einer Störanfälligkeit erreicht wird. Insbesondere können sich insoweit keine elektrischen Kontakte lösen, insoweit keine elektrischen Kontakte vorhanden sind.

Der Stator ist derart ungeteilt, dass ein ungeteiltes Statorblechpaket vorhanden ist, das im Betrieb das Magnetfeld führt und die Wicklung bzw. Wicklungen aufnimmt. Dies schließt die Demontierbarkeit einzelner Elemente wie bspw. Befestigungselemente, Kühlelemente, Abdeckelemente oder dergleichen nicht aus.

Gemäß einer Ausführungsform wird vorgeschlagen, dass der Stator einen Außendurchmesser von mehr als 4,3 m aufweist. Damit ist ein verhältnismäßig großer Luftspaltdurchmesser bei ungeteiltem Stator möglich, der dabei maximale Transportmaße berücksichtigt. Vorzugsweise wird ein Stator mit einem Außendurchmesser von mehr als 4,7 m vorgesehen. Insbesondere wird vorgeschlagen, dass der Außendurchmesser des Stators etwa 5 m beträgt. Hierdurch kann die maximale Transportbreite ausgenutzt und insoweit der Synchrongenerator optimiert bzw. maximiert werden, ohne dass eine problematische Teilung des Stators erforderlich ist. Durch die Verwendung eines Stators mit einem Außendurchmesser von 5 m wird somit für einen ungeteilten Stator die maximale Baugröße - hinsichtlich des Durchmessers - erreicht, wenn diese 5 m als Transportobergröße angesehen werden.

Erfindungsgemäß ist der Läufer in Umfangsrichtung aus mehreren Läufersegmenten zusammengesetzt, insbesondere aus vier Läufersegmenten. Vorzugsweise wird hierbei eine symmetrische Aufteilung vorgeschlagen, wobei alle und/oder jeweils zwei Läufersegmente gleich groß sind, insbesondere ein gleich großes Kreissegment ausmachen. Hierdurch kann die Zusammensetzbarkeit und/oder der Transport vereinfacht und erleichtert und häufig auch standardisiert werden.

Vorzugsweise sind Läufersegmente mit unterschiedlich vielen Läuferpolen vorgesehen. Auch diese Ausgestaltung lässt eine symmetrische Teilung des Läufers zu, wenn bspw. zwei kleine und zwei große Segmente vorgesehen sind, die jeweils gleich groß sind, insbesondere jeweils gleich viele Läuferpole aufweisen. Bspw. kann ein Läufer mit 48 Polen in vier Segmente unterteilt sein, von denen zwei jeweils 8 Pole und die anderen beiden jeweils 16 Pole aufweisen. Dadurch kann bspw. erreicht werden, dass zwei große Segmente vorgesehen sind, die dem Läufer eine Grundstabilität verleihen, wobei die beiden kleineren Segmente beim Zusammensetzen im Grunde die beiden großen Segmente miteinander verbinden.

Erfindungsgemäß wird ein Synchrongenerator mit einer Drehachse vorgeschlagen, bei dem zum Transport wenigstens zwei Läufersegmente demontierbar sind. Dieser Synchrongenerator ist dabei so ausgestaltet, dass dann, wenn diese beiden Läufersegmente demontiert sind, die größte Ausdehnung des Synchrongenerators in eine Richtung durch den Stator und in eine andere Richtung durch den Läufer bestimmt wird. Dabei bildet der Stator in einer ersten Querrichtung zur Drehachse des Stators die größte Ausdehnung des Synchrongenerators, wobei in einer Längsrichtung quer zur Drehachse und quer zur Querrichtung der Läufer die größte Ausdehnung des Synchrongenerators bildet. Entsprechend ist der Synchrongenerator so ausgebildet, dass zwei, insbesondere sich gegenüberliegende Läufersegmente demontiert werden und dadurch die Abmessung des Generators genau an dieser Stelle verringert wird, nämlich auf den Durchmesser des Stators. Diese demontierbaren und entsprechend dann demontierten Läufersegmente brauchen nur so groß zu sein, dass ihr Demontieren genau dazu führt, dass der Stator dann dort die größte Abmessung bildet. Eine weitere Reduzierung der Abmessung des Generators in diese Richtung ist dann nicht mehr möglich, weil der Stator nicht demontiert werden kann, jedenfalls nicht substantiell.

Diese Querrichtung ist dann beim Transport vorzugsweise quer zur Fahrtrichtung des Transportfahrzeugs auszurichten, mit dem Ergebnis, dass die Transportbreite des beladenen Fahrzeugs auf den Außendurchmesser des Stators reduziert wurde. In Längsrichtung, nämlich somit auch in Fahrtrichtung des Transportfahrzeugs, brauchen die Abmessungen des Generators nicht reduziert zu werden. Hier kann der Läufer bzw. können Läufersegmente verbleiben und der Generator weist somit in dieser Richtung als Außenabmessung den Außendurchmesser des Läufers auf.

Vorzugsweise wird ein Synchrongenerator verwendet, der eine Nennleistung von wenigstens 500 kW, wenigstens einem MW und insbesondere von wenigstens zwei MW aufweist. Es wird somit ein Synchrongenerator für eine Windenergieanlage mit großer Nennleistung vorgeschlagen. Dieser ist durch einen ungeteilten Stator und einen geteilten Läufer vorteilhaft realisierbar.

Ebenfalls wird eine Windenergieanlage vorgeschlagen, die einen Synchrongenerator gemäß wenigstens einer der oben genannten Ausführungsformen aufweist. Entsprechend ist eine Windenergieanlage mit maximiertem Generator mit gleichzeitig hoher Zuverlässigkeit erreichbar, die zudem keine unnötigen Transportprobleme generiert.

Außerdem wird eine Transportanordnung zum Transportieren eines teilweise zerlegten Synchrongenerators gemäß wenigstens einer der vorbeschriebenen Ausführungsformen vorgeschlagen. Dieser Synchrongenerator weist einen Stator und einen Außenläufer auf. Die Transportanordnung umfasst einen Haupttransportabschnitt, der auch als Haupttransportteil bezeichnet werden kann und dieser Haupttransportabschnitt umfasst den Stator des Synchrongenerators. Weiterhin umfasst die Transportanordnung wenigstens zwei vom Synchrongenerator demontierte Läufersegmente. Demnach wird vorgeschlagen, den Synchrongenerator zum Transport teilweise zu zerlegen, wobei der Stator in einem Stück transportiert wird.

In einem nicht zur Erfindung gehörenden Vergleichsbeispiel sind die wenigstens zwei demontierten Läufersegmente als zwei Läuferhälften ausgebildet und so zueinander versetzt in eine Transportstellung ineinandergelegt, dass sie zusammen in einer Richtung eine Abmessung aufweisen, die nicht einen Außendurchmesser des Stators überschreitet. Hierbei wird insbesondere davon ausgegangen, dass diese beiden Läuferhälften als Ringsegment ausgebildet sind und ein Schenkel jedes der beiden Ringsegmente teilweise zwischen zwei Schenkeln des jeweils anderen Ringsegmentes angeordnet ist. Um bei dieser Anordnung wenigstens in einer Richtung eine Abmessung zu erreichen, die die Größe des Durchmessers des Stators nicht überschreitet, müssen die Ringsegmente und damit der Ring des zusammengesetzten Läufers entsprechend schlank ausgebildet sein.

Gemäß einer weiteren Ausführungsform wird vorgeschlagen, dass der Haupttransportabschnitt wenigstens ein Läufersegment, insbesondere zwei Läufersegmente, umfasst, die an dem Synchrongenerator montiert sind. Der Haupttransportabschnitt wird dabei so ausgebildet und die Läufersegmente, die am Stator montiert bleiben, werden entsprechend ausgewählt, dass der Haupttransportabschnitt in einer ersten Richtung eine Breite aufweist, die dem Außendurchmesser des Stators entspricht und in einer zweiten Richtung eine Länge aufweist, die dem Außendurchmesser des Läufers entspricht. Hierbei ist insbesondere die erste Richtung quer zu einer Fahrtrichtung beim Transport ausgerichtet und die Breite ist dann insbesondere die tatsächliche Breite eines so beladenen Transportfahrzeugs. Die zweite Richtung weist dabei insbesondere in Fahrtrichtung. Die erste und zweite Richtung liegen vorzugsweise etwa in einer Ebene und etwa rechtwinklig zueinander.

Der Hauptabschnitt der Transportanordnung umfasst einen teilweisen Synchrongenerator gemäß einer der oben beschriebenen Ausführungsformen, jedoch ohne die Läufersegmente, die von dem Synchrongenerator demontiert wurden. Mit anderen Worten entspricht der Hauptabschnitt der Transportanordnung im Wesentlichen dem Synchrongenerator als Ganzes, von dem jedoch wenigstens insoweit Läufersegmente demontiert wurden, dass jedenfalls in einer Richtung die Breite des Synchrongenerators auf die Größe, nämlich den Durchmesser, des Stators reduziert werden konnte. Es wird somit ein Transport eines Synchrongenerators vorgeschlagen, bei dem eine auf ein Minimum reduzierte Demontage von Läufersegmenten vorgeschlagen wird.

Weiterhin wird ein Verfahren gemäß Anspruch 11 vorgeschlagen. Hierbei wird der Synchrongenerator zum Teil zerlegt, indem zumindest zwei Läufersegmente demontiert werden. Hierbei schließt der Transport zum Aufstellungsort einer Windenergieanlage auch den Transport zu einem temporären Fertigungsort in der Nähe des Aufstellungsortes der Windenergieanlage ein, nämlich insbesondere ein Fertigungsort, an dem bspw. ein Zusammensetzen des Synchrongenerators erfolgen kann und der Transport von dort zum in unmittelbarer angeordneten Aufstellungsort im Grunde keinen Transportbeschränkungen, insbesondere hinsichtlich Transportbreite, hier unterworfen ist. Mit anderen Worten ist der Transport auf öffentlichen Straßen bei Erreichen einer solchen temporären Fertigungsstätte bereits abgeschlossen.

Nachfolgend wird die Erfindung exemplarisch anhand von Ausführungsformen unter Bezugnahme auf die begleitenden Figuren erläutert.
- Fig. 1: zeigt eine beispielhafte, nicht zur Erfindung gehörende Windenergieanlage in einer perspektivischen Darstellung.
- Fig. 2: zeigt einen Synchrongenerator der Windenergieanlage aus Fig. 1 perspektivisch und schematisch in einer Schnittansicht.
- Fig. 3: zeigt den Synchrongenerator gemäß Fig. 2 in einer seitlichen Schnittansicht schematisch.
- Fig. 4: zeigt einen Stator in einer axialen Draufsicht.
- Fig. 5: zeigt den teilweise zerlegten Synchrongenerator in einer axialen Draufsicht.
- Fig. 6: zeigt zwei zum Transport platzsparend zusammengelegte Läufersegmente des Synchrongenerators in einer Draufsicht.
- Fig. 7: zeigt einen teilweise zerlegten Synchrongenerator gemäß einer erfindungsgemäßen Ausführungsform in einer schematischen, axialen Ansicht.
- Fig. 8: zeigt einen teilweise zerlegten Synchrongenerator gemäß Fig. 7 in einer perspektivischen Ansicht.
- Fig. 9: zeigt einen teilweise zerlegten Synchrongenerator gemäß Fig. 7 und 8 in einer Schnittansicht schematisch und perspektivisch.

Nachfolgend können gleiche oder ähnliche Elemente derselben oder ähnlichen Ausführungsformen in unterschiedlichem Maßstab dargestellt sein.

Fig. 1 zeigt eine beispielhafte, zur Erfindung nicht gehörende Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

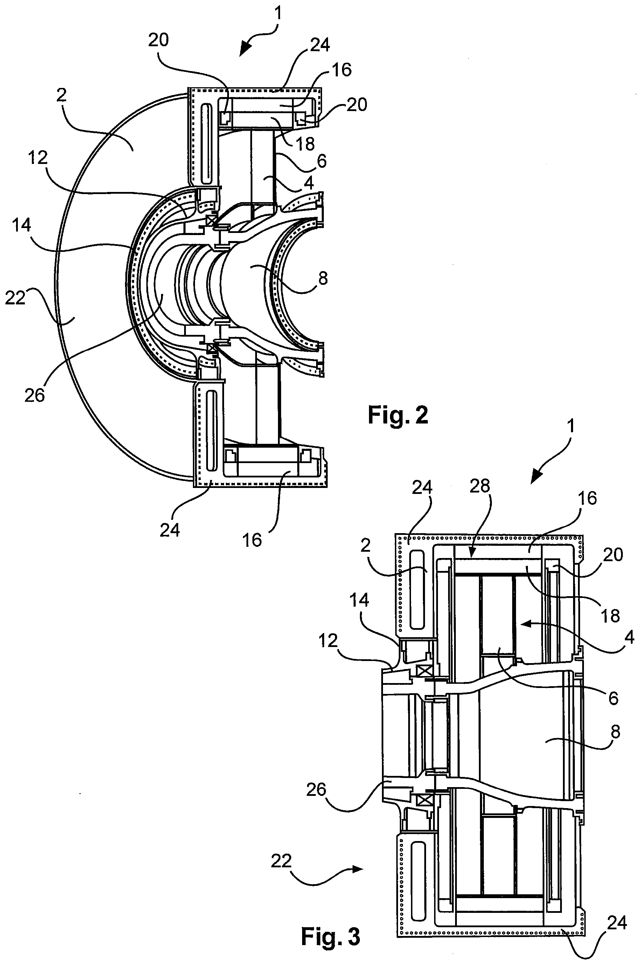

Der Synchrongenerator 1 der Fig. 2 weist einen geteilten Außenläufer 2 und einen einteiligen Stator 4 auf. Der Stator 4 wird mittels radialer Tragbleche 6 auf einem Aufnahmezapfen 8 getragen, der auch als Achszapfenaufnahme bezeichnet werden kann.

Zur Verwendung des Synchrongenerators 1 in einer Windenergieanlage ist eine Rotornabe 12 gezeigt, die Rotorblätter aufnimmt, die in der Fig. 2 nicht dargestellt sind, und die über einen Nabenflansch 14 an dem Außenläufer 2 befestigt wird, um dadurch den Außenläufer 2 relativ zum Stator 4 zu drehen.

Der Außenläufer 2 weist dafür Polpakete 16 auf, die sich relativ zu einem Statorpaket 18 drehen. Durch diese Drehung wird Strom erzeugt, der in Wicklungen erzeugt wird bzw. weitergeleitet wird, zu denen in Fig. 2 lediglich Wickelköpfe 20 angedeutet sind. Fig. 2 ist eine Schnittansicht in perspektivischer Darstellung, wobei einige Schnittflächen, nämlich insbesondere die des Statorpakets 18 und auch von dem Aufnahmezapfen 8 nicht schraffiert dargestellt sind. Die gezeigten Polpakete 16 sind jedoch von einer Seitenansicht gezeigt, die sich durch eine tatsächliche Teilung des Außenläufers 2 ergibt.

Von dem Außenläufer 2 zeigt Fig. 2 nur eine Außenläuferhälfte 22. Die Außenläuferhälfte 22 weist zur Verbindung mit einer weiteren Außenläuferhälfte 22 einen Verbindungsflansch 24 auf. Dieser Verbindungsflansch ragt in dem in Fig. 2 gezeigten Beispiel über die grundsätzliche Ringförmigkeit und über die Abmessung eines solchen Rings des Außenläufers 2 hinaus. Dabei ist zu beachten, dass der Synchrongenerator 1 für eine getriebelose Windenergieanlage vorgesehen ist und somit ein Langsamläufer ist. Ein etwaiger Windwiderstand durch diesen vorstehenden Verbindungsflansch 24 ist somit für den Betrieb des Synchrongenerators 1 unproblematisch. Zudem wird der Außenläufer 2 und damit auch der Verbindungsflansch 24 in einer Nabenabdeckung bzw. in einem Spinnergehäuse vorgesehen sein, mit dem er zusammen rotiert.

Fig. 2 zeigt zudem einen Achszapfen 26 im Ansatz, der mit dem Aufnahmezapfen 8 bzw. der Achszapfenaufnahme 8 fest verbunden ist und die Rotornabe 12 in einem außerhalb der Darstellung der Fig. 2 liegenden Bereich über ein entsprechendes Drehlager drehbar tragen kann. Weil die Läufernabe 12 im zusammengesetzten Zustand fest mit dem Außenläufer 2 über den Nabenflansch 14 verbunden ist, wird hierüber auch der Außenläufer 2 getragen.

Fig. 3 zeigt den Synchrongenerator der Fig. 2 in einer seitlichen Schnittansicht, soweit jedenfalls der Stator 4 und andere stehende Teile, nämlich der Aufnahmezapfen 8 und der Achszapfen 26 geschnitten dargestellt sind. Zwischen den Läufer-Polpaketen 16 und dem Statorpaket 18 bildet sich ein Luftspalt 28 aus, der das Transportmaß des Synchrongenerators 1 bestimmt. Im gezeigten Beispiel beträgt der Luftspaltdurchmesser 5 m. Hierbei wird vereinfachend vernachlässigt, dass der Luftspalt als solcher selbst wenige Millimeter dick ist. Insoweit bestimmt der Außendurchmesser des Stators 4, der bei Vernachlässigung der Luftspaltdicke dem Luftspaltdurchmesser entspricht die Transportbreite. Zum Transport können somit die beiden Außenläuferhälften 22, von denen jeweils eine in Fig. 2 und 3 gezeigt ist, von dem Synchrongenerator 1 entfernt werden und als maximale Abmessung verbleibt der Außendurchmesser des Stators 4, nämlich der Außendurchmesser im Bereich des Statorpakets 18.

Beim Zusammensetzen des Synchrongenerators 1 nach dem Transport können die beiden Außenläuferhälften 22 über den Verbindungsflansch 24 miteinander verbunden werden. Anschließend kann die Rotornabe 12 am Nabenflansch 14 mit dem Außenläufer 2, der nun aus den beiden Außenläuferhälften 22 zusammengesetzt ist, fest befestigt werden. Hierbei kann eine Lagerung der Rotornabe 12 auf dem Achszapfen 26 vorgesehen werden, durch die gleichzeitig auch, zumindest teilweise, der Außenläufer 2 gelagert wird.

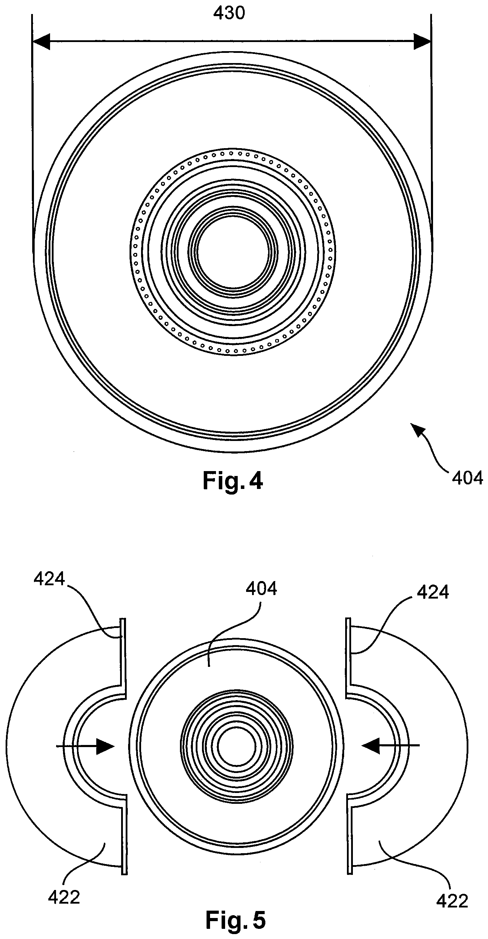

Fig. 4 zeigt schematisch einen Stator 404 in einer axialen Ansicht schematisch, wobei der Stator 404 dem Stator 4 der Fig. 2 und 3 sehr ähnlich ist. In der Fig. 4 ist nur der Stator 404 dargestellt und sein Außendurchmesser 430 bestimmt damit die maximale Abmessung und damit die notwendige Breite beim Transport auf einem Fahrzeug.

In Fig. 5 ist benachbart zum einteiligen Stator 404 ein geteilter Außenläufer mit jeweils einer Außenläuferhälfte 422 in einer axialen Seitenansicht dargestellt. Die Fig. 5 veranschaulicht dabei das Zusammensetzen der beiden Außenläuferhälften 422, die gemäß der gezeigten Pfeile aufeinander zubewegt werden und dabei dem Stator 404 in sich aufnehmen. Zur Befestigung werden die Verbindungsflansche 424 der beiden Außenläuferhälften 422 aufeinander zubewegt und anschließend miteinander verschraubt. Schon aus der Fig. 5 ist erkennbar, dass durch diese einfache Maßnahme, nämlich der Zerlegung des Außenläufers in zwei demontierbare Segmente, der Platzbedarf zum Transportieren des Stators 404 sinkt. Die beiden Außenhälften 422 können dabei in dem gezeigten demontierten Zustand gut transportiert werden.

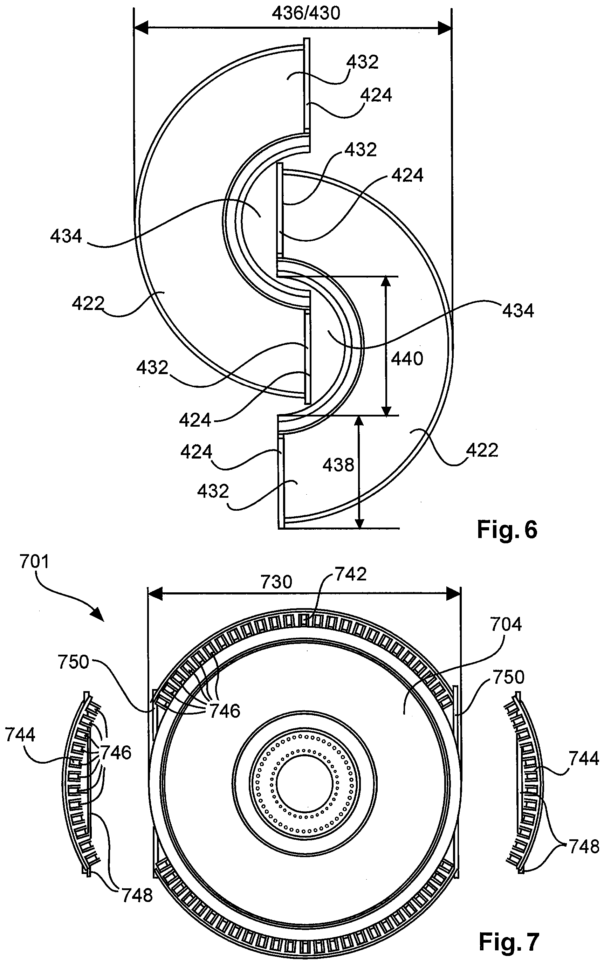

Fig. 6 zeigt eine Möglichkeit, die beiden Außenläuferhälften 422 möglichst platzsparend ineinander zulegen. Dabei werden die beiden Außenläuferhälften 422 jeweils mit einem Schenkel 432 in einen halbumschlossenen Innenbereich 434 der jeweiligen Außenläuferhälfte 422 gelegt. Ein Schenkel 432 ist dabei insbesondere ein Abschnitt der Außenläuferhälfte 422, der an eine Verbindungsflansch 424 endet.

Eine solche Anordnung kann eine Transportbreite 436 schaffen, die der Größe des Außendurchmessers 430 des Stators 404 entspricht, ihn zumindest nicht überschreitet.

Um eine solche Ineinanderlegung wie in Fig. 6 gezeigt erreichen zu können, sind die Läuferhälften 422 jeweils als Ringsegmente ausgebildet mit einer maximalen radialen Dicke 438, die im gezeigten Beispiel letztlich durch Ausmaß des Verbindungsflansches 424 bestimmt wird. Diese radiale Dicke 438 muss kleiner sein als ein innerer freier Durchmesser 440 des Außenläufers 402.

Fig. 7 zeigt eine erfindungsgemäße Ausführungsform eines Synchrongenerators 701 in einer schematischen, axialen Ansicht. Dieser Synchrongenerator 701 weist einen Stator 704 und einen geteilten Außenläufer auf. Der geteilte Außenläufer weist ein großes Läufersegment 742 und zwei kleine Außenläufersegmente 744 auf. Zum Transport werden die kleinen Außenläufersegmente 744 demontiert und sind entsprechend in Fig. 7 separat dargestellt. Durch das Demontieren dieser beiden kleinen Außenläufersegmente 744 wird der Durchmesser bzw. die Breite des Synchrongenerators 701 in einem Bereich auf den Außendurchmesser 730 des Stators 704 begrenzt. Eine solche Begrenzung bzw. Verringerung der Breite des Synchrongenerators 701 auf den Wert des Durchmessers 730 des Stators 704 ist somit erreichbar, ohne dass der Außenläufer vollständig demontiert werden müsste. Das Demontieren zweier kleiner Außenläufersegmente kann ausreichend sein. Der Stator 704 bildet zusammen mit den beiden großen Außenläufersegmenten 742 im Wesentlichen einen Haupttransportabschnitt. Im gezeigten Beispiel weist der Außenläufer 702 Läuferpole 746 auf, wobei die beiden kleinen Außenläufersegmente 744 jeweils 12 Pole aufweisen und die beiden großen Außenläufersegmente 742 jeweils 24 Pole aufweisen.

Zum Befestigen weisen die beiden kleineren Außenläufersegmente 744 jeweils ein Sekantenflansch 748 auf. An dem verbleibenden Synchrongenerator 701 ist entsprechend jeweils ein Gegenflansch 750 vorgesehen. Hierdurch kann der Synchrongenerator 701 bereits eine verhältnismäßig hohe Stabilität selbst bei demontierten kleinen Außenläufersegmenten 744 aufweisen, weil die Gegenflansche 750 und weitere Elemente auch ohne Befestigung mit dem jeweiligen kleinen Außenläufersegment 744 die beiden am Synchrongenerator 701 verbleibenden großen Außenläufersegmente 742 verbinden. Die Sekantenflansche 748 und die korrespondierenden Gegenflansche 750 können dabei als flache, ebene Verbindungsflansche ausgebildet sein und schaffen dadurch eine verhältnismäßig einfach gestaltete Möglichkeit, die kleinen Außenläufersegmente 744 an dem verbleibenden Synchrongenerator 701 zu befestigen. Gleichzeitig entsteht dabei eine stabile Verbindung, die auch verhältnismäßig einfach überprüft werden kann, nämlich insbesondere durch Sichtung.

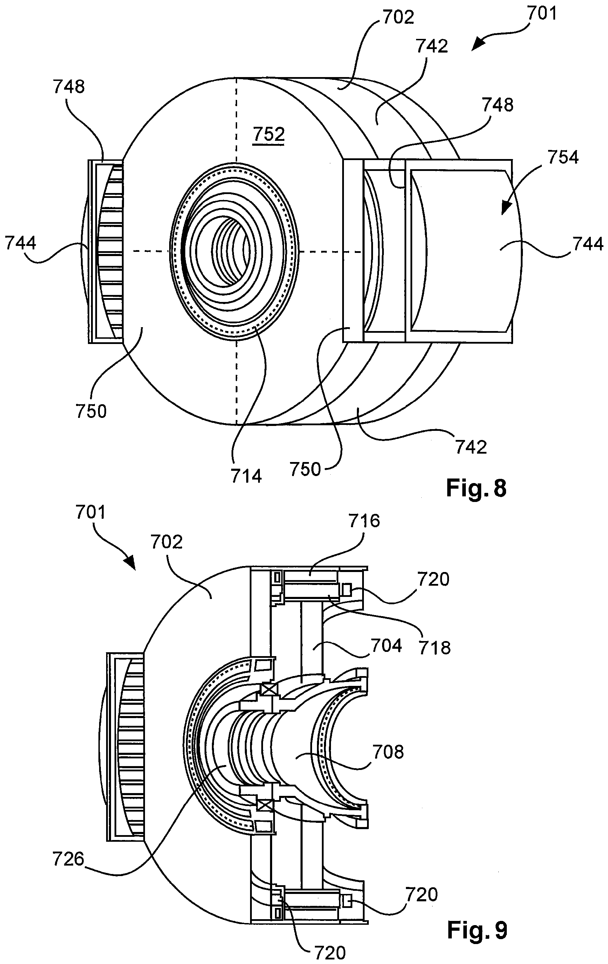

In der perspektivischen Darstellung der Fig. 8 des Synchrongenerators 701 wird auch eine grundsätzlich bevorzugte gekapselte Ausführung des Außenläufers 702 deutlich. Eine gekapselte Ausführung stellt somit nicht nur in der gezeigten Variante, sondern generell eine bevorzugte Ausgestaltung dar. Die beiden kleinen Außenläufersegmente 744 bilden nur einen sehr kleinen Anteil des gesamten Außenläufers 702. Es ist erkennbar, dass jedenfalls für den Transport des Synchrongenerators 701 das Demontieren der beiden kleinen Außenläufersegmente 744 die Stabilität der Konstruktion des Außenläufers 702 kaum beeinflusst. Durch eine insgesamt starre Außenhülle 752 des Außenläufers 702 ist bereits eine hohe Stabilität gegeben.

In dieser starren Hülle 752 sind die beiden Gegenflansche 750 ausgebildet und zum Verbinden mit den Sekantenflanschen 748 vorbereitet. Es ist in der Fig. 8 auch erkennbar, dass zum Montieren und Demontieren die Sekantenflansche 748 eine gute Zugänglichkeit aufweisen. Auch die beiden kleinen Außenläufersegmente 744 sind durch einen Hüllenabschnitt 754 in ihrer Stabilität gestärkt.

Zur Montage des Synchrongenerators 701 in einer Windenergieanlage ist ein Nabenflansch 714 vorgesehen, an dem auf einfache Art und Weiser der aerodynamische Rotor befestigt werden kann.

Die Fig. 9 lässt in ihrer schematischen Schnittansicht des Synchrongenerators 701 erkennen, dass dessen Aufbau ganz ähnlich zu dem in den Fig. 2 und 3 gezeigten ist. Auch hier ist ein Stator 704 mit einem Statorpaket 718 und Wickelköpfen 720 vorgesehen. Auch der Außenläufer 702 weist gemäß Fig. 9 Polpakete 716 auf, die sich relativ zu dem Statorpaket 718 drehen. Zum Aufnehmen sind ebenfalls ein Aufnahmezapfen 708 und ein daran befestigter Achszapfen 726 vorgesehen. Die erfindungsgemäße Ausführungsform der Fig. 7 bis 9 unterscheidet sich vom Vergleichsbeispiel der Fig. 2 und 3 im Wesentlichen durch die Art der Teilung des Außenläufers 2 bzw. 702. Gemäß dem Vergleichsbeispiel der Fig. 2 und 3 wird eine Unterteilung in zwei im Wesentlichen gleiche Außenläuferhälften 22 vorgeschlagen, wohingegen die Ausführungsformen der Fig. 7 bis 9 lediglich das Demontieren zweier kleiner Außenläufersegmente 744 vorschlägt.

Es wird somit ein Synchrongenerator mit größtmöglichem Luftspaltdurchmesser bei Einhaltung einer vorgegebenen maximalen Transportbreite vorgeschlagen, insbesondere bei Einhaltung einer Transportbreite von 5 m. Der Trennungsaufwand der Generatorkomponenten wird dabei gering gehalten. Weiterhin wird eine transportoptimierte Aufteilung der Generatorkomponenten vorgeschlagen.

Ein hoher Verschaltungs- und Wicklungsaufwand an einer Statortrennstelle, bei der insbesondere ein Drehstromsystem oder sogar zwei Drehstromsysteme aufgeteilt und am Aufstellungsort der Windenergieanlage wieder zusammengesetzt werden müssen, entfällt. Entsprechend kann der Schaltungs- und Wicklungsaufwand an einer bzw. mehreren entsprechenden Trennstellen reduziert werden. Zudem wird auch die Anzahl etwaiger Trennstellen reduziert.

Der Stator wird hierbei ohne Trennung ausgeführt. Der Läufer, nämlich der elektromagnetische Rotor des Synchrongenerators wird wenigstens in vier Elemente geteilt. Grundsätzlich wird ein Läufer und eine Reihenschaltung der Pole bzw. Polschuhe vorgeschlagen, wenn dieser fremd erregt ist. Hierbei reduziert sich der Trennungsaufwand beim Auftrennen eines solchen Läufers, jedenfalls im Vergleich zu dem Auftrennen eines mehrphasigen Wechselspannungssystems an einem Stator. Als Ergebnis wird u.a. eine transportoptimierte Aufteilung vorgeschlagen. Insbesondere bei der in den Fig. 7 bis 9 gezeigten Ausführungsformen wird ein gemeinsamer Transport von Stator und einem Teil des Läufers vorgeschlagen, bei dem lediglich zwei Seitenteile vom Läufer durch einen Extratransport transportiert werden müssen.

## Patentansprüche

1. Synchrongenerator (701) für eine getriebelose Windenergieanlage (100), umfassend
- einen Stator (704),
- eine Drehachse und
- als Läufer (702) einen mehrteiligen Außenläufer (702),
wobei wenigstens zwei Läufersegmente (744) des Synchrongenerators (701) zum Transport vom Synchrongenerator (701) demontierbar sind,
**dadurch gekennzeichnet, dass** der Stator (704) ungeteilt ist, der Läufer (702) aus einzelnen Läuferpolen zusammengesetzt ist, wobei jeder Läuferpol eine Gleichstromwicklung trägt und wenn die wenigstens zwei Läufersegmente (744) demontiert sind,
- in einer Querrichtung quer zur Drehachse der Stator (704) die größte Ausdehnung des Synchrongenerators (701) bildet und
- in einer Längsrichtung, quer zur Drehachse und quer zur Querrichtung der Läufer die größte Ausdehnung des Synchrongenerators (701) bildet.

2. Synchrongenerator (701) nach Anspruch 1,
**dadurch gekennzeichnet, dass** der Läufer (702) fremderregt ist.

3. Synchrongenerator (701) nach einem der Ansprüche 1 oder 2,
**dadurch gekennzeichnet, dass** der Synchrongenerator (701) als Ringgenerator ausgebildet ist und/oder wenigstens 48, wenigstens 72, insbesondere wenigstens 192 Statorpole aufweist und/oder als 6-phasiger Generator (701) ausgebildet ist und/oder dass der Stator (4) des Synchrongenerators (1) eine durchgängige Wicklung aufweist.

4. Synchrongenerator (701) nach einem der vorstehenden Ansprüche,
**gekennzeichnet durch** einen Außendurchmesser des Stators (704) von mehr als 4,3 m, insbesondere mehr als 4,7 m, insbesondere etwa 5 m.

5. Synchrongenerator (701) nach einem der vorstehenden Ansprüche,
**dadurch gekennzeichnet, dass** der Läufer (2) einen inneren freien Raum mit einem freien Innendurchmesser aufweist und die Läufersegmente (744) als Ringsegmente ausgebildet sind mit einer radialen Dicke (438), die kleiner ist als der freie Durchmesser (440), wobei die radiale Dicke (438) kleiner ist als 0,8 mal des freien Innendurchmessers (440), insbesondere kleiner als 0,7 mal des freien Innendurchmessers (440).

6. Synchrongenerator (701) nach Anspruch 5,
**dadurch gekennzeichnet, dass** Läufersegmente (22) mit unterschiedlich vielen Läuferpolen vorgesehen sind.

7. Synchrongenerator (701) nach einem der vorstehenden Ansprüche,
**gekennzeichnet durch** eine Nennleistung von wenigstens 500 kW, wenigstens einem MW, insbesondere von wenigstens zwei MW.

8. Windenergieanlage (100) mit einem Synchrongenerator (701) nach einem der vorstehenden Ansprüche.

9. Transportanordnung zum Transportieren eines teilweise zerlegten Synchrongenerators nach einem der Ansprüche 1 bis 7, umfassend einen den Stator (704) des Synchrongenerators (701) umfassenden Haupttransportabschnitt und
- wenigstens zwei vom Synchrongenerator demontierte Läufersegmente (744), wobei
- die wenigstens zwei Läufersegmente (744) des Synchrongenerators (701) zum Transport vom Synchrongenerator (1) demontiert sind, sodass
- in einer Querrichtung quer zur Drehachse der Stator (704) die größte Ausdehnung des Synchrongenerators (701) bildet und
- in einer Längsrichtung, quer zur Drehachse und quer zur Querrichtung der Läufer die größte Ausdehnung des Synchrongenerators (701) bildet.

10. Transportanordnung nach Anspruch 9,
**dadurch gekennzeichnet, dass** der Haupttransportabschnitt wenigstens zwei weitere Läufersegmente (742) umfasst, die an dem Synchrongenerator (701) montiert sind, wobei der Haupttransportabschnitt
- in einer ersten Richtung eine Breite aufweist, die dem Außendurchmesser des Stators (704) entspricht, und
- in einer zweiten Richtung eine Länge aufweist, die dem Außendurchmesser des Läufers (702) entspricht.

11. Verfahren zum Transportieren eines Synchrongenerators (701) nach einem der Ansprüche 1 bis 7, umfassend die Schritte
- Demontieren wenigstens zweier demontierbarer Läufersegmente (744) von dem Synchrongenerator (701) so, dass der Synchrongenerator (701) in einer Richtung auf eine Breite verkleinert wird, die dem Außendurchmesser des Stators (704) entspricht,
- Verladen des um die demontierten Läufersegmente (744) reduzierten Synchrongenerators (701) auf ein Transportfahrzeug,
- Transportieren des Synchrongenerators (701) zu einem Aufstellungsort einer Windenergieanlage (100), wobei die demontierten Läufersegmente (744) separat auf demselben Fahrzeug oder separat auf einem separaten Fahrzeug zum Aufstellungsort transportiert werden und
- Montieren der demontierten Läufersegmente (744) an dem Synchrongenerator (701) am Aufstellungsort der Windenergieanlagen (100).

## Claims

1. Synchronous generator (701) of a gearless wind turbine, comprising:
- a stator (704),
- an axis of rotation and
- as a rotor (702) a multipart external rotor (702), wherein at least two rotor segments (744) of said synchronous generator (701) are removable for transporting of said synchronous generator,
**characterized in that**
the stator is undivided,
the rotor is composed of individual rotor poles, wherein each rotor pole carries a DC winding and if said at least two rotor segments are removed, said stator (704) forms in a transverse direction transverse to the axis of rotation of the stator (704) the largest extent of said synchronous generator (701) and said rotor forms in a longitudinal direction, transverse to the axis of rotation and transverse to the transverse direction the largest extent of said synchronous generator (701).

2. Synchronous generator (701) according to claim 1, **characterized in that** said rotor (702) is externally excited.

3. Synchronous generator (701) according to any one of claims 1 or 2, **characterized in that** said synchronous generator (701) is designed as a ring generator and / or has at least 48, at least 72, in particular at least 192 stator poles and / or is formed as a 6-phase generator (701) and / or that the stator (4) of said synchronous generator (1) has a continuous winding.

4. Synchronous generator (701) according to one of the preceding claims, **characterized by** an outer diameter of said stator (704) of more than 4.3 m, in particular more than 4.7 m, in particular about 5 m.

5. Synchronous generator (701) according to any one of the preceding claims, **characterized in that** said rotor (2) has an inner free space with a free inner diameter and the rotor segments (744) are formed as ring segments with a radial thickness (438) which is smaller than the free diameter (440), wherein the radial thickness (438) is less than 0.8 times the free inner diameter (440), in particular less than 0.7 times the free inner diameter (440).

6. Synchronous generator (701) according to claim 5, **characterized in that** rotor segments (22) are provided with different numbers of rotor poles.

7. Synchronous generator (701) according to any one of the preceding claims, **characterized by** a rated power of at least 500 kW, at least one MW, in particular of at least two MW.

8. Wind turbine (100) with a synchronous generator (701) according to any one of the preceding claims.

9. A transport arrangement for transporting a partially disassembled synchronous generator according to one of claims 1 to 7, comprising a main transport section comprising the stator (704) of the synchronous generator (701) and at least two rotor segments (744) disassembled by the synchronous generator, wherein the at least two rotor segments (744) of the synchronous generator (701) for transport from the synchronous generator (1) are dismantled, so that
- in a transverse direction transverse to the axis of rotation of the stator (704) forms the largest dimension of the synchronous generator (701) and
- in a longitudinal direction, transverse to the axis of rotation and transverse to the transverse direction of the rotor forms the largest extent of the synchronous generator (701).

10. Transport arrangement according to claim 9, **characterized in that** the main transport section comprises at least two further rotor segments (742) which are mounted on the synchronous generator (701), wherein the main transport section
- in a first direction has a width corresponding to the outer diameter of the stator (704), and
- in a second direction has a length corresponding to the outer diameter of the rotor (702).

11. Method for transporting a synchronous generator (701) according to any one of claims 1 to 7, comprising the steps of:
- disassembling at least two detachable rotor segments (744) from the synchronous generator (701) so that the synchronous generator (701) reduces in one direction to a width which corresponds to the outer diameter of the stator (704),
- loading the synchronous generator (701), which has been reduced by the dismantled rotor segments (744), onto a transport vehicle,
- transporting the synchronous generator (701) to a location of a wind turbine (100), the disassembled runner segments (744) separately on the same vehicle or separately on a separate vehicle to the site and
- mounting the disassembled runner segments (744) to the synchronous generator (701) at the site of wind turbines (100).

## Revendications

1. Générateur synchrone (701) pour une éolienne (100) à entraînement direct, comprenant
- un stator (704),
- un axe de rotation et
- comme rotor (702) un rotor extérieur (702) en plusieurs parties,
dans lequel au moins deux segments de rotor (744) du générateur synchrone (701) peuvent être démontés pour le transport du générateur synchrone (701),
**caractérisé en ce**
**que** le stator (704) est non divisé,
le rotor (702) est composé de pôles de rotor individuels, dans lequel chaque pôle de rotor porte un enroulement de courant continu, lorsque les au moins deux segments de rotor (744) sont démontés,
- dans une direction transversale transversalement à l'axe de rotation, le stator (704) forme la plus grande dimension du générateur synchrone (701) et
- dans une direction longitudinale, transversalement à l'axe de rotation et transversalement à la direction transversale, le rotor forme la plus grande dimension du générateur synchrone (701) .

2. Générateur synchrone (701) selon la revendication 1,
**caractérisé en ce que** le rotor (702) est à excitation séparée.

3. Générateur synchrone (701) selon l'une quelconque des revendications 1 ou 2,
**caractérisé en ce que** le générateur synchrone (701) est réalisé en tant que générateur annulaire et/ou présente au moins 48, au moins 72, en particulier au moins 192, pôles de stator et/ou est réalisé en tant que générateur à 6 phases (701) et/ou que le stator (4) du générateur synchrone (1) présente un enroulement continu.

4. Générateur synchrone (701) selon l'une quelconque des revendications précédentes,
**caractérisé par** un diamètre extérieur du stator (704) de plus de 4,3 m, en particulier de plus de 4,7 m, en particulier environ de 5 m.

5. Générateur synchrone (701) selon l'une quelconque des revendications précédentes,
**caractérisé en ce que** le rotor (2) présente un espace libre intérieur avec un diamètre intérieur libre et les segments de rotor (744) sont réalisés en tant que segments annulaires avec une épaisseur radiale (438) qui est inférieure au diamètre libre (440), dans lequel l'épaisseur radiale (438) est inférieure à 0,8 fois le diamètre intérieur libre (440), en particulier inférieure à 0,7 fois le diamètre intérieur libre (440).

6. Générateur synchrone (701) selon la revendication 5,
**caractérisé en ce que** des segments de rotor (22) avec des pôles de rotor plus ou moins nombreux sont prévus.

7. Générateur synchrone (701) selon l'une quelconque des revendications précédentes,
**caractérisé par** une puissance nominale d'au moins 500 kW, d'au moins un MW, en particulier d'au moins deux MW.

8. Eolienne (100) avec un générateur synchrone (701) selon l'une quelconque des revendications précédentes.

9. Ensemble de transport destiné à transporter un générateur synchrone en partie démonté selon l'une quelconque des revendications 1 à 7, comprenant une partie de transport principale comprenant le stator (704) du générateur synchrone (701) et
- au moins deux segments de rotor (744) démontés du générateur synchrone, dans lequel
- les au moins deux segments de rotor (744) du générateur synchrone (701) sont démontés pour le transport du générateur synchrone (1), de sorte que
- dans une direction transversale transversalement à l'axe de rotation, le stator (704) forme la plus grande dimension du générateur synchrone (701) et
- dans une direction longitudinale, transversalement à l'axe de rotation et transversalement à la direction transversale, le rotor forme la plus grande dimension du générateur synchrone (701) .

10. Ensemble de transport selon la revendication 9,
**caractérisé en ce que** la partie de transport principale comprend au moins deux autres segments de rotor (742), qui sont montés sur le générateur synchrone (701), dans lequel la partie de transport principale
- présente dans une première direction une largeur qui correspond au diamètre extérieur du stator (704), et
- présente dans une deuxième direction une longueur qui correspond au diamètre extérieur du rotor (702) .

11. Procédé de transport d'un générateur synchrone (701) selon l'une quelconque des revendications 1 à 7, comprenant les étapes
- de démontage d'au moins deux segments de rotor (744) démontables du générateur synchrone (701), de sorte que le générateur synchrone (701) soit diminué dans une direction à une largeur qui correspond au diamètre extérieur du stator (704),
- de chargement du générateur synchrone (701) réduit des segments de rotor (744) démontés sur un véhicule de transport,
- de transport du générateur synchrone (701) vers un site d'installation d'une éolienne (100), dans lequel les segments de rotor (744) démontés sont transportés séparément sur le même véhicule ou séparément sur un véhicule séparé vers le site d'installation et
- de montage des segments de rotor (744) démontés sur le générateur synchrone (701) sur le site d'installation des éoliennes (100).
